(19) Europäisches Patentamt
European Patent Office
Office européen des brevets

(11) **EP 0 829 295 A2**

(12) **EUROPÄISCHE PATENTANMELDUNG**

(43) Veröffentlichungstag:
18.03.1998 Patentblatt 1998/12

(51) Int. Cl.$^6$: **B01D 53/86**, B01J 23/40,
B01J 27/053, B01J 27/25

(21) Anmeldenummer: 97112481.3

(22) Anmeldetag: 19.07.1997

(84) Benannte Vertragsstaaten:
AT BE CH DE DK ES FI FR GB GR IE IT LI LU MC
NL PT SE
Benannte Erstreckungsstaaten:
AL LT LV RO SI

(30) Priorität: 17.09.1996 DE 19637792

(71) Anmelder:
HÜLS AKTIENGESELLSCHAFT
45764 Marl (DE)

(72) Erfinder:
• Maschmeyer, Dietrich, Dr.
45657 Recklinghausen (DE)
• Neutzler, Ulrich
58300 Wetter (DE)
• Sigg, Reinhard, Dr.
45772 Marl (DE)

(54) **Katalysator und Verfahren zur katalytischen Abgasreinigung im DMT-Prozess**

(57) Die vorliegende Erfindung betrifft einen Katalysator für Verfahren zur Reinigung von unter Druck stehenden Abgasen, wie sie nach der Oxidation von para-Xylol (p-X) mit Luft in flüssiger Phase bei der Herstellung von Dimethylterephthalat (DMT) anfallen, der als Komponenten

a) mindestens ein Oxid des Titans und
b) mindestens ein Element aus der VIII. Nebengruppe des Periodensystems der Elemente in metallischer und/oder oxidischer Form

enthält,
ein Verfahren zur Herstellung eines solchen Katalysators, wobei man Komponente b) auf Formkörper, die mindestens Komponente a) enthalten, einzeln oder im Gemisch durch Tauch- und/oder Sprühimprägnieren aufbringt und
ein Verfahren zur Reinigung von unter Druck stehenden Abgasen, wie sie nach der Oxidation von para-Xylol (p-X) mit Luft in flüssiger Phase bei der Herstellung von Dimethylterephthalat (DMT) anfallen, wobei das unter Druck stehende, sauerstoffhaltige Abgas aus der Oxidation zunächst über eine ein- oder mehrstufige Kondensation, eine ein- oder mehrstufige Absorption und nachfolgend gegebenenfalls unter Zufuhr von Sauerstoff über eine unter Druck betriebene katalytische Nachverbrennung geführt wird, wobei man für die katalytische Nachverbrennung den vorliegenden Katalysator einsetzt.

EP 0 829 295 A2

**Beschreibung**

Die Erfindung betrifft einen Katalysator für Verfahren zur Reinigung von unter Druck stehenden Abgasen, wie sie nach der Oxidation von para-Xylol (p-X) mit Luft in flüssiger Phase bei der Herstellung von Dimethylterephthalat (DMT) anfallen,
ein Verfahren zur Herstellung eines solchen Katalysators und
ein Verfahren zur Reinigung von unter Druck stehenden Abgasen, wie sie nach der Oxidation von para-Xylol (p-X) mit Luft in flüssiger Phase bei der Herstellung von Dimethylterephthalat (DMT) anfallen, wobei das unter Druck stehende, sauerstoffhaltige Abgas aus der Oxidation zunächst über eine ein- oder mehrstufige Kondensation, eine ein- oder mehrstufige Absorption und nachfolgend, gegebenenfalls unter Zufuhr von Sauerstoff, über eine unter Druck betriebene katalytische Nachverbrennung geführt wird.

Es ist bekannt, daß der heutige Witten-DMT-Prozeß im wesentlichen die Verfahrensschritte

- Oxidation von para-Xylol (p-X) und para-Toluylsäuremethylester (p-TE), in der Regel mit nachgeschalteter Abgasreinigung,
- Veresterung der Reaktionsprodukte aus der Oxidation mit Methanol,
- Trennung des entstandenen, sogenannten Rohesters (DMT-roh) in eine p-TE-reiche Fraktion, die üblicherweise in die Oxidation zurückgeführt wird, eine Roh-DMT-Fraktion, die im allgemeinen mehr als 85 Gew.-% DMT enthält, und eine schwersiedende Rückstandsfraktion, gegebenenfalls deren Aufarbeitung, beispielsweise durch eine nachgeschaltete Methanolyse oder Thermolyse, und eine nachfolgende Rückgewinnung des Katalysators,
- Reinigung der Roh-DMT-Fraktion, beispielsweise durch Waschen Umkristallisieren und Reindestillation,

beinhaltet ("Terephthalsäuredimethylester", Ullmann Bd. 22, 4. Auflage, S. 529 - 533; EP 0 464 046 B1; DE-OS 40 26 733).

Es ist auch bekannt aus DMT, d. h. aus besonders DMT-reichen Fraktionen bzw. DMT-reinst, durch eine gezielte Hydrolyse Terephthalsäure entsprechender Qualität herzustellen.

Die Oxidation eines Gemisches aus para-Xylol (p-X) und para-Toluylsäuremethylester (p-TE oder pT-Ester) wird im allgemeinen mit Luftsauerstoff in Gegenwart eines Schwermetallkatalysators (DE-PS 20 10 137) bei einer Temperatur von etwa 140 bis 180 °C und einem Druck von etwa 4 bis 8 bar abs. in flüssiger Phase durchgeführt. Aus der Oxidationsstufe resultiert ein Reaktionsgemisch, das überwiegend Monomethylterephthalat (MMT), p-Toluylsäure (p-TA) und Terephthalsäure (TA) gelöst bzw. suspendiert in p-TE enthält und mit Methanol bei einer Temperatur von etwa 250 bis 280 °C und einem Druck von 20 bis 25 bar abs. verestert wird. Ferner wird bei der Oxidation ein Abgas erzeugt, das in Abhängigkeit von Druck und Temperatur mit aliphatischen sowie aromatischen Verbindungen weitgehend gesättigt ist. So enthält das Abgas neben Wertprodukten auch Reaktionsnebenprodukte, hierzu gehören u. a. die niedrigsiedenden Verbindungen Acetaldehyd, Formaldehyd und die entsprechenden Methylacetale, Dimethylether, Essigsäure und Ameisensäure sowie deren Methylester. Neben diesen organischen Bestandteilen enthält das Abgas aus der Oxidation im wesentlichen Luftstickstoff, einen Restsauerstoffgehalt von 0,5 bis 4 Gew.-%, $CO_2$ mit 1 bis 3 Gew.-% und 0,3 bis 2,0 Gew.-% CO. Beim Witten-DMT-Verfahren wird das Abgas üblicherweise zunächst mehrstufig abgekühlt, wobei die höher- und mittelsiedenden Wertprodukte schrittweise auskondensieren. Die im Abgas verbliebenen Wertprodukte, überwiegend Methanol und p-X, werden nachfolgend in einer mehrstufigen Absorption bis auf Spuren aus dem Abgas entfernt, wobei die in den Absorptionsmitteln angereicherten Wertprodukte in den Prozeß zurückgeführt werden.

In vielen Ländern sind nach gesetzlichen Vorgaben organische Kohlenstoffverbindungen und CO aus Abgasen und Abluft zu entfernen.

Die EP 0 544 729 B1 offenbart ein Verfahren zur Reinigung eines Oxidationsabgases, das aus einer Luftoxidation von Xylol stammt und unter einem Druck von 5 bis 50 bar steht, wobei zunächst in einer Abgaswäsche unter Druck zumindest das Xylol durch Absorption mit einem Ester, beispielsweise para-Toluylsäuremethylester (p-TE) oder Benzoesäuremethylester (BME) oder einem Estergemisch, beispielsweise aus p-TE und BME, weitgehend entfernt wird. Der Absorption kann ferner eine Kondensationsstufe vorgeschaltet sein. Darüber hinaus sollen die nach der absorptiven Reinigung noch im Abgas befindlichen oxidierbaren Stoffe unter Druck verbrannt und das unter Druck stehende Abgas in einer Entspannungsturbine zur Erzeugung von Energie genutzt werden. Solche für die Verbrennung von Abgasen unter Druck notwendigen Verbrennungseinheiten sind aufwendig und teuer, sowohl in der Anschaffung als auch im Betrieb. Darüber hinaus sind geeignete Druckbrennkammern im Markt praktisch nicht mehr erhältlich.

Die EP 0 544 726 B1 erwähnt in diesem Zusammenhang die Möglichkeit, die im Abgas befindlichen oxidierbaren Bestandteile katalytisch unter Druck zu verbrennen, wobei das zu verbrennende Abgas nach der Absorptionswäsche in der Regel mit Wasserdampf gesättigt vorliegt.

Die VDI-Richtlinie 3476, "Katalytische Verfahren der Abgasreinigung", VDI-Handbuch Reinhaltung der Luft, Band 6 (Juni 1990), beschreibt u. a. die Entfernung von CO, Kohlenwasserstoffen sowie $NO_x$ aus Autoabgasen unter Verwendung von Pt/Rh/Pd auf keramischen Trägern bei Temperaturen von 300 bis 950 °C. Als Trägermaterialien für Katalysatoren zur Abgasreinigung kommen u. a. Metalle als geformte Bleche (Streckgitter), Gewebe, Netze, Formkörper aus Metalloxid, wie $Al_2O_3$, $SiO_2$, $TiO_2$, $ZrO_2$, MgO sowie natürliche und synthetische Mineralien, wie Bims, Mullit, Cordierit, Steatit oder Zeolithe, zur Anwendung. Auch zur Entfernung von CO sowie Dämpfen organischer Verbindungen aus Industrieabgasen werden hier ganz allgemein Edelmetall- oder Metalloxidkatalysatoren auf keramischen Trägern, oberflächenreiche Trägerkatalysatoren oder Vollkontakte angeführt.

Die EP 0 664 148 A1 lehrt ein Verfahren zur Reinigung von unter Druck stehenden Abgasen durch katalytische Nachverbrennung bei einer Arbeitstemperatur zwischen 250 und 800 °C und Drücken zwischen 2 und 20 bar, insbesondere unter Einsatz von Katalysatoren mit Platin und/oder Palladium auf $\gamma$-Aluminiumoxid. Versuche zeigen, daß solche Katalysatoren unter den Arbeitsbedingungen in Abgasen aus der Oxidation von para-Xylol bei der Herstellung von DMT bereits nach kurzer Betriebsdauer desaktivieren und die geforderte Schadstoffminderung daher nicht mehr erreicht wird.

Der Erfindung lag daher die Aufgabe zugrunde, ein Katalysatorsystem bereitzustellen, das den Anforderungen zur Reinigung der bei der Herstellung von DMT in der Oxidation anfallenden Abgase genügt. Ein weiteres Anliegen der vorliegenden Erfindung war es, solche Abgasreinigungsmaßnahmen auch unter wirtschaftlichen Aspekten in den DMT-Prozeß einzubinden.

Die gestellte Aufgabe wird erfindungsgemäß entsprechend den Angaben der Patentansprüche gelöst.

Es wurde nun gefunden, daß ein Katalysator, der mindestens ein Oxid des Titans und mindestens ein Element aus der VIII. Nebengruppe des Periodensystems der Elemente in metallischer und/oder oxidischer Form enthält, in hervorragender Weise für das Verfahren zur Reinigung von unter Druck stehendem Abgas, das aus der Oxidation von para-Xylol (p-X) mit Luft in flüssiger Phase bei der Herstellung von Dimethylterephthalat (DMT) stammt, geeignet ist, da auch nach einem vergleichsweise langen Betriebszeitraum keine nennenswerte Desaktivierung festzustellen war, die geforderten Abgaswerte eingehalten werden konnten und sich so auch durch ausgezeichnete wirtschaftliche Standzeiten auszeichnet.

Gegenstand der vorliegenden Erfindung ist somit ein Katalysator für Verfahren zur Reinigung von unter Druck stehenden Abgasen, wie sie nach der Oxidation von para-Xylol (p-X) mit Luft in flüssiger Phase bei der Herstellung von Dimethylterephthalat (DMT) anfallen, der dadurch gekennzeichnet ist, daß er als Komponenten

a) mindestens ein Oxid des Titans und
b) mindestens ein Element aus der VIII. Nebengruppe des Periodensystems der Elemente in metallischer und/oder oxidischer Form

enthält.

Vorzugsweise enthält der erfindungsgemäße Katalysator, jeweils bezogen auf das Gewicht des Katalysators:

- Komponente a) in Mengen von 50 bis 99 Gew.-% und
- Komponente b) in Mengen von 0,01 bis 5 Gew.-%,
  wobei Komponente b) in Summe und als Metall gerechnet ist.

Geeigneterweise stammt das Titanoxid oder eine Vorläuferverbindung für Komponente a) aus dem sogenannten Sulfatprozeß, so daß der erfindungsgemäße Katalysator vorzugsweise als weitere Komponente c) Sulfat enthält, wobei er Komponente c) insbesondere in Mengen von 0,1 bis 10 Gew.-%, bezogen auf sein Gewicht, enthalten kann.

Sulfat als Komponente c) kann im erfindungsgemäßen Katalysator als solches oder beispielsweise auch als Hydrogensulfat oder Oxidsulfat oder Wasser-haltiges Oxidsulfat eines entsprechenden Metalls oder als an eine oxidische Metallverbindung angelagerte oder anhaftende Schwefelsäure vorliegen. Sulfat kann auch in mehreren der zuvor genannten Formen nebeneinander vorliegen.

Im erfindungsgemäßen Katalysator liegt Komponente a) geeigneterweise als Titandioxid vor, beispielsweise als Rutil. Bevorzugt liegt im erfindungsgemäßen Katalysator jedoch Komponente a) überwiegend in der Anatas-Form vor. Es können aber auch Titanoxide mit Sauerstoffunterschuß oder Wasser-haltige Oxide, Oxidhydroxide oder Hydroxide oder Sulfate, einschließlich der Hydrogensulfate, beispielsweise Oxidsulfate oder Wasser-haltiges Oxidsulfat des Titans, oder Titanoxide mit angelagerter oder anhaftender Schwefelsäure, vorliegen. Auch kann Komponente b) im erfindungsgemäßen Katalysator anteilig in einer sulfatischen Form vorliegen.

Geeigneterweise kann der erfindungsgemäße Katalysator als zusätzliche Komponenten Bariumsulfat und/oder Oxide des Wolframs und/oder Oxide des Vanadiums und/oder Oxide des Zirkons und/oder entsprechende Sulfate und/oder Phosphate, einschließlich der Hydrogenphosphate, und/oder Oxide des Siliziums und/oder Silikate enthalten.

Die Struktur des erfindungsgemäßen Katalysators kann kugel-, strang- röhren-, ring- oder auch sattel- oder wabenförmig ausgeführt sein. Erfindungsgemäße Katalysatoren weisen im allgemeinen rund 200 bis 2 000 $m^2/m^3$ geometrische Oberfläche auf, vorzugsweise handelt es sich dabei um Strangextrudate, beispielsweise mit einem Durchmesser von 4 mm. Die erfindungsgemäßen Katalysatoren können auch Wabenstruktur besitzen, insbesondere solche, bei denen der hydraulische Durchmesser ($4a/U=d_h$ mit a= lichte Kanalquerschnittsfläche, U= Umfang der lichten Kanalquerschnittsfläche und $d_h$ = hydraulischer Durchmesser) der einzelnen Kanalquerschnitte der durchströmten Wabenkanäle im Bereich von 1,5 mm bis 6,5 mm liegt.

Gegenstand der vorliegenden Erfindung ist auch ein Verfahren zur Herstellung eines Katalysators nach den Ansprüchen 1 bis 9, das dadurch gekennzeichnet ist, daß man Komponente b) auf Formkörper, die mindestens Komponente a) enthalten, einzeln oder im Gemisch durch Tauch- und/oder Sprühimprägnieren aufbringt.

Ein Verfahren zur Herstellung geformter Träger auf Titanoxid-Basis, auch Formkörper genannt, ist z. B. in der DE-PS 26 58 569 offenbart. Zur Herstellung eines erfindungsgemäßen Katalysators werden im allgemeinen Formkörper auf Titanoxid-Basis, wie sie unter anderem durch die Zubereitung und Extrusion formbarer Titanoxidhaltiger Massen, nachfolgende Trocknung und Kalzinierung der Formkörper erhältlich sind und geeigneterweise eine BET-Oberfläche zwischen 10 bis 200 $m^2$/g sowie ein Porenvolumen zwischen 0,1 und 0,6 $cm^3$/g aufweisen, eingesetzt. Die Formkörper können zur Verbesserung der mechanischen Eigenschaften beispielsweise durch Glasfasern verstärkt sein.

In der Regel bringt man Komponente b) des erfindungsgemäßen Katalysators durch eine sogenannte Imprägnierung auf den Träger auf, wobei die Formkörper im allgemeinen mit einer Lösung, die Komponente b) geeigneterweise in Form gelöster Salze enthält, in Kontakt gebracht werden. Beim erfindungsgemäßen Verfahren verwendet man für die Imprägnierung der Formkörper eine Lösung, für deren Zubereitung Komponente b) vorzugsweise als Nitrat eingesetzt wird. Hierbei kann es erforderlich sein, den pH-Wert der Lösung in geeigneter Weise, beispielsweise durch Zugabe einer organischen oder anorganischen Säure, wie beispielsweise Salpetersäure, oder einer Lauge, einzustellen oder auch einen Komplexbildner oder Stabilisator, beispielsweise zur Stabilisierung eines Edelmetallsols, zuzusetzen. Die Imprägnierung kann durch ein- oder mehrmaliges Besprühen der Formkörper mit einer Lösung oder durch ein- oder mehrmaliges Tauchen der Formkörper in eine Lösung erfolgen.

Geeigneterweise werden die imprägnierten Formkörper, vorzugsweise unter Luftzutritt, in einem Temperaturbereich von 30 bis hin zu 650 °C getrocknet und nachkalziniert, d. h., thermisch nachbehandelt.

Beim Einsatz von Nitraten ist ein besonderer Vorteil des erfindungsgemäßen Herstellverfahrens, daß Komponente b) durch eine einfache thermische Behandlung der imprägnierten Formkörper in metallischer und/oder oxidischer Form und ohne weitere Rückstände, wie beispielsweise Halogenide, auf dem Formkörper fixiert werden kann. Ferner können so auch kosten- und zeitaufwendige Arbeitsschritte, wie sie beispielsweise beim 'Wash-coating' erforderlich sind oder ein Reduktionsschritt mit Wasserstoff in der Gasphase eingespart werden.

Vorzugsweise liegt im erfindungsgemäßen Katalysator Komponente b) zum überwiegenden Teil im Bereich der Oberfläche des Katalysatorformkörpers vor, d. h., hier wird eine sogenannte Schalenimprägnierung bevorzugt. Als Komponente b) enthält der erfindungsgemäße Katalysator vorzugsweise Platin und/oder Palladium und/oder Rhodium. Besonders bevorzugt werden erfindungsgemäße Katalysatoren mit einem Platingehalt im Bereich von 0,05 bis 0,5 Gew.-%, ganz besonders vorzugsweise 0,1 bis 0,2 Gew.-% Pt, bezogen auf das Gewicht des Katalysators.

Gegenstand der vorliegenden Erfindung ist ferner ein Verfahren zur Reinigung von unter Druck stehenden Abgasen, wie sie nach der Oxidation von para-Xylol (p-X) mit Luft in flüssiger Phase bei der Herstellung von DimethyIterephthalat (DMT) anfallen, wobei das unter Druck stehende, sauerstoffhaltige Abgas aus der Oxidation zunächst über eine ein- oder mehrstufige Kondensation, eine ein- oder mehrstufige Absorption und nachfolgend, gegebenenfalls unter Zufuhr von Sauerstoff, über eine unter Druck betriebene katalytische Nachverbrennung geführt wird, das dadurch gekennzeichnet ist, daß man für die katalytische Nachverbrennung einen Katalysator nach den Ansprüchen 1 bis 13 einsetzt.

In allgemeinen werden beim erfindungsgemäßen Abgasreinigungsverfahren aus dem Oxidationsabgas einer Luftoxidation von p-X die in dem Abgas enthaltenen Wertprodukte - im wesentlichen p-X, p-TE, DMT, Benzoesäuremethylester (BME) und Methanol - in einer Kondensationseinheit, gegebenenfalls auch in der nachgeschalteten Wäscherbzw. Absorptionseinheit, zum überwiegenden Teil entfernt und in geeigneter Weise in den Prozeß zurückgeführt. Die Kondensation wird in der Regel bei Temperaturen im Bereich von 15 bis 80°C und Drücken von 3 bis 20 bar abs. betrieben.

Das aus der Kondensation stammende, unter Druck stehende Abgas wird geeigneterweise zunächst in einem Gegenstromwärmetauscher aufgeheizt, beispielsweise von ca. 25 °C auf rund 120 °C bei Drücken von 3 bis 20 bar abs., und danach in eine Wäschereinheit gefahren. Die Absorptionseinheit kann aus mehreren Wäscherstufen bestehen, beispielsweise kann zunächst eine Abgaswäsche mit BME oder einem Estergemisch erfolgen.

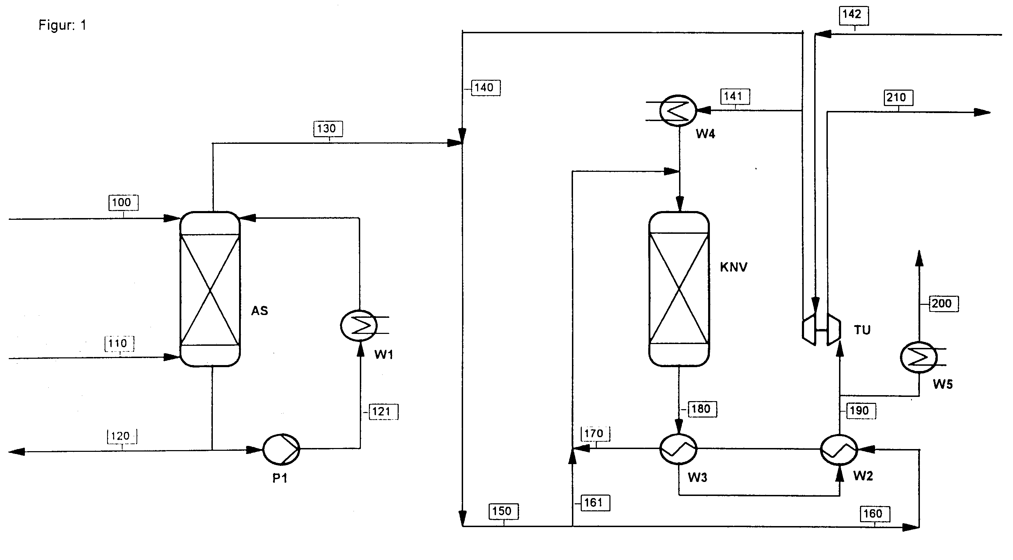

Figur 1 zeigt eine bevorzugte Ausführungsform des erfindungsgemäßen Verfahrens, vgl. Legende.

Nach einer solchen Absorptionseinheit kann man das Abgas (110) geeigneterweise noch mit dem im Prozeß anfallenden Abwasser (100) sättigen, wobei das sogenannte Prozeßwasser im allgemeinen organische Bestandteile enthält. In der Regel wird hierzu ein sogenannter Sättiger (AS) eingesetzt. Das Prozeßwasser wird bevorzugt über eine Pumpe (P1) und einen mit Niederdruckdampf beheizten Wärmetauscher (W1) zirkuliert und am Kopf des Sättigers (AS) aufgegeben. Im allgemeinen sättigt sich dabei das Abgas mit Wasser und den im ursprünglichen Prozeßwasser enthaltenen, im wesentlichen flüchtigen organischen Inhaltsstoffen. Um zu vermeiden, daß sich der Sättiger (AS) durch Anreicherung von Feststoffen sowie hochsiedenden Bestandteilen, die im allgemeinen im Sumpf des Sättigers anfallen, zusetzt, kann ein geringer Teil des Abwassers **(120)** aus dem Sumpfteil des Sättigers **(AS)** abgezogen und beispielsweise an einer geeigneten Stelle in den Prozeß zurückgeführt werden.

Das die Absorptionseinheit, vorzugsweise den Sättiger **(AS)**, verlassende Abgas enthält üblicherweise im DMT-Prozeß anfallende Nebenprodukte, wie CO sowie niedrigsiedende Verbindungen wie z. B. Acetaldehyd, Formaldehyd, Methylacetat, Dimethylether, Essigsäure und Ameisensäure sowie deren Methylester. Um diese Nebenprodukte möglichst umweltfreundlich zu entsorgen, kann das unter Druck stehende Abgas nun einer katalytischen Nachverbrennung zugeführt werden.

Für die katalytische Nachverbrennung **(KNV)** setzt man hier den erfindungsgemäßen Katalysator ein. Der Reaktor der katalytischen Nachverbrennung ist in der Regel als Festbettreaktor ausgeführt und kann sowohl Schüttkatalysatoren als auch monolithische Katalysatoren aufnehmen. Geeigneterweise werden wabenförmige Monolithe eingesetzt, die sich im allgemeinen durch einen sehr geringen Druckverlust auszeichnen, was sich beim erfindungsgemäßen Abgasreinigungsverfahren insbesondere bei der Energierückgewinnung durch eine Abgasturbine positiv auswirkt.

Beim erfindungsgemäßen Verfahren wird die katalytische Nachverbrennung vorzugsweise bei Drücken zwischen 2 und 20 bar abs., besonders vorzugsweise 5 bis 10 bar abs., und einer Arbeitstemperatur zwischen 160 und 650 °C, besonders vorzugsweise zwischen 200 und 550 °C, betrieben. Bevorzugt betreibt man die katalytische Nachverbrennung im erfindungsgemäßen Verfahren bei einer Raumgeschwindigkeit (GHSV) im Bereich von 1 000 h$^{-1}$ bis 50 000 h$^{-1}$, besonders vorzugsweise im Bereich von 5 000 h$^{-1}$ bis 30 000 h$^{-1}$

$$(GHSV = \frac{\dot{V}i.N.}{V_{Kat.}} \left[\frac{Nm^3}{m^3 \cdot h}\right], \text{ mit } \dot{V} \text{ i. N. = Volumenstrom in Norm} \left[\frac{Nm^3}{h}\right] \text{ und } V_{Kat.} = \text{Katalysatorvolumen } [m^3]).$$

Für das erste Anfahren des Reaktors **(KNV)** wird in der Regel zunächst Prozeßluft **(141)** über einen elektrisch betriebenen Wärmetauscher **(W4)** aufgeheizt und über den Reaktor **(KNV)** gefahren, bis dieser seine vorgesehene Betriebstemperatur erreicht hat, die das Anspringen des Katalysators sicherstellt. Anschließend kann der Reaktor mit Abgas beaufschlagt werden. Geeigneterweise läuft die katalytische Nachverbrennung dann thermisch weitgehend autark. Beim erfindungsgemäßen Verfahren enthält das Abgas vor Katalysator üblicherweise dampfförmiges Wasser in Mengen von 0,04 bis 2,8 kg/Nm$^3$, insbesondere 0,1 bis 0,4 kg Wasser pro Nm$^3$ Abgas.

Vorzugsweise wird der zu reinigende Abgasstrom **(150)** vor Eintritt in den Katalysatorbereich im Gegenstrom mit dem aus dem Reaktor austretenden gereinigten Abgas (Reingas) **(180)** durch eine geeignete Anordnung entsprechender Wärmetauscher **(W2, W3)** vorgeheizt **(160, 161, 170)**.

Die Oxidation im DMT-Prozeß wird im allgemeinen so eingestellt, daß der zur katalytischen Verbrennung erforderliche Sauerstoff im Abgas bereits vor Eintritt des Abgases in den Reaktor vorhanden ist. Der Sauerstoffgehalt im Abgas **(130)** kann bei Bedarf durch Zuführung von Druckluft **(140)** angehoben werden. In der Regel werden so die im Abgas befindlichen organischen Verbindungen und CO am erfindungsgemäßen Katalysator nahezu vollständig zu Kohlendioxid und Wasser umgesetzt. Der Sauerstoffgehalt im Reingas **(180, 190)** wird vorzugsweise auf einen Wert von 0,5 bis 2 Vol.-% eingestellt.

Zur Rückgewinnung der Kompressionsenergie kann das Reingas **(190)** über eine Abgasturbine **(TU)** zur Erzeugung mechanischer oder elektrischer Energie entspannt werden. Für die Energierückgewinnung mittels Entspannungsturbine nutzt man im allgemeinen solche Reingasströme, die unter einem Druck von vorzugsweise mehr als 3 bar abs. stehen. Da das Abgas in der Regel nun den Anforderungen genügt, kann es über einen Kamin abgeleitet werden **(210)**. Die Temperatur kann hierzu, gegebenenfalls durch Zufuhr von nicht aufgeheiztem Abgas, so geführt werden, daß das die Abgasturbine verlassende Reingas eine Temperatur von ca. 125 °C besitzt.

Beim erfindungsgemäßen Verfahren kann man auch den Reingasstrom vor der Turbine zumindest anteilig abzweigen, nach entsprechender Trocknung auf Temperaturen < 40 °C abkühlen **(W 5)** und geeigneterweise als Inertgas, beispielsweise zum "Blanketing" im Prozeß, weiterverwenden **(200)**.

Die besonderen Vorteile des erfindungsgemäßen Verfahrens bestehen neben der erzielten guten wirtschaftlichen Katalysatorstandzeit auch in der gleichzeitigen Verwertung des anfallenden Abwassers, der Verbrennung aller in der Oxidation anfallenden und in das Abgas übergehenden Nebenprodukte und die Minimierung der CO-Gehalte im Reingas auf Werte, die mit den Meßvorrichtungen im Betriebsalltag oft nicht mehr erfaßbar sind.

Die Erfindung wird durch die nachfolgenden Beispiele näher erläutert:

**Beispiele:**

**Beispiel 1:**

**- Herstellung eines Katalysators für die Reinigung des Abgases aus der Oxidation im Witten-DMT-Prozeß -**

2 000 g eines kommerziellen, strangförmigen Katalysatorträgers auf Basis $TiO_2$ (Typ H9050 der Hüls AG) werden in einer rotierenden Trommel vorgelegt und mittels eines aufgeleiteten heißen Gasstromes auf 110 °C erhitzt. Nach Erreichen der Temperatur werden über eine Zeit von ca. 20 Minuten bei 110 °C 500 ml einer wäßrigen Pt-Nitrat-Lösung mit w(Pt) = 5,2 g/l aufgesprüht. Dabei verdampft das Lösemittel, und das Metall wird in einer dünnen Randzone auf dem Träger abgeschieden. Anschließend wird das Material entnommen und im Luftstrom 4 Stunden bei 450 °C kalziniert.

**Beispiel 2:**

**- Reinigung des Abgases aus der Oxidation im Witten-DMT-Prozeß -**

Figur 1 zeigt eine bevorzugte Ausführungsform des erfindungsgemäßen Verfahrens zur Reinigung von unter Druck stehenden Abgasen aus der Oxidation im Witten-DMT-Prozeß. Hierzu sind in Tabelle 1 a + b Stoffströme, deren Zusammensetzung und die jeweiligen Betriebsbedingungen dargelegt, vgl. Legende. Die Abgas- und Abwassermengen sowie deren Zusammensetzungen sind typisch für eine DMT/PTA-Anlage mit einer Kapazität von 240 kt/a.

Das nach der Kondensations- und Absorptionseinheit in der DMT/PTA-Anlage anfallende und von Nutzprodukten im wesentlichen befreite Abgas tritt als Stoffstrom **(110)** mit einer Menge von 70 768 kg/h und einer Temperatur von 120 °C in den unteren Teil des Sättigers **(AS)** ein. Im oberen Teil des Sättigers wird das aus der DMT/PTA-Anlage stammende Abwasser (20 000 kg/h) **(100)** aufgegeben. Der Sättiger ist entweder mit Ventilböden oder mit strukturierter Pakkung ausgerüstet. Das Abwasser wird mittels einer Zirkulationspumpe **(P1)** über einen mit Niederdruckdampf beheizten Wärmetauscher **(W1)** im Kreislauf gefahren **(121)**. Um Anreicherung von Feststoffen im Sättiger und dadurch möglicherweise bedingte Funktionsstörungen der Anlage zu vermeiden, wird ein geringer Teil des Wäschersumpfproduktes ausgeschleust **(120)** und in den DMT/PTA-Prozeß an eine geeignete Stelle zurückgeführt.

Zum Anfahren des Reaktors **(KNV)** wird zunächst Prozeßluft **(141)** über den elektrisch beheizten Wärmetauscher **(W4)** in die katalytische Nachverbrennung gefahren, bis eine Temperatur erreicht ist, die das Anspringen der Reaktion sicherstellt.

Das gewaschene und mit Wasser sowie den organischen Inhaltsstoffen des Abwassers gesättigte Abgas **(130)** wird mit einer Temperatur von 121,5 °C und einem Druck von 7,1 bar über die Gegenstromwärmeaustauscher auf 250 °C aufgeheizt **(150, 160, 170)** und in den Reaktor der katalytischen Nachverbrennung gefahren.

Die Eingangstemperatur des Abgases vor Reaktor kann sowohl beim Anfahren als auch während des Normalbetriebes über den Stoffstrom **(161)** eingestellt werden. Zur Verbrennung notwendiger Luftsauerstoff kann zusätzlich über den Stoffstrom **(140)** zugeführt werden.

Der Reaktor **(KNV)** ist mit dem Katalysator-Typ H 5922 der Hüls AG, vgl. Beispiel 1, bestückt und wird mit einer Raumgeschwindigkeit im Bereich von rund 30 000

$$\left[ \frac{Nm^3}{m^3 \cdot h} \right]$$

betrieben.

Die Verbrennung ist vollständig und nur relativ geringe Sauerstoffüberschüsse sind hierfür erforderlich.

Bedingt durch die Reaktionswärme des exothermen Verbrennungsprozesses verläßt das gereinigte Abgas (Reingas) den Reaktor mit einer Temperatur von 401 °C **(180)** und wird auf die Mantelseite der Wärmetauscher **(W2, W3)** zur Aufheizung des Abgases gegeben, wobei sich das Reingas auf eine Temperatur von 277 °C abkühlt **(190)** und anschließend über die an den Luftkompressor gekoppelte Abgasturbine **(TU)** auf Normaldruck entspannt **(210)** und über den Kamin in die Atmosphäre abgeleitet wird.

Zur Gewinnung von Inertgas ist es möglich, das Reingas **(190)** teilweise unter Druck abzukühlen und in der DMT/PTA-Anlage als 'Blanketing' zu benutzen **(200)**.

**Legende zu Figur 1, Tabelle 1 und den Stoffströmen**

**Figur 1** zeigt eine bevorzugte Ausführungsform des erfindungsgemäßen Verfahrens zur Reinigung von unter Druck stehenden Abgasen aus der Oxidation im Witten-DMT-Prozeß.

**Stoffströme in Figur 1 und Tabelle 1a und b:**

| | |
|---|---|
| **100** | : Prozeßwasser |
| **110** | : Abgas aus der Kondensations- bzw. Absorptionseinheit |
| **120** | : Sumpfprodukt, Rückführung in den Prozeß |
| **121** | : Sättigerkreislauf |
| **130** | : Abgas aus dem Sättiger |
| **140** | : Druckluft |
| **141** | : Druckluft zum Anfahren des Reaktors |
| **142** | : Ansaugluft |
| **150** | : Abgas, mit Sauerstoff angereichert |
| **160** | : Abgasstrom zu den Wärmetauschern W 2 + 3 |
| **161** | : Abgasstrom zur Regelung der Reaktionstemperatur |
| **170** | : Abgas über Gegenstromwärmetauscher aufgeheizt, vor Reaktor |
| **180** | : Reingas nach Reaktor |
| **190** | : Reingas nach Gegenstromwärmetauscher |
| **200** | : abgekühlter und unter Druck stehender Reingasteilstrom, Rückführung als Inertgas in den Prozeß |
| **210** | : restlicher, entspannter Reingasstrom vor Kamin |

**Anlagenteile in Figur 1:**

| | |
|---|---|
| **AS** | : Sättiger |
| **P1** | : Pumpe |
| **W1** | : Wärmetauscher, mit Dampf betrieben |
| **W2+3** | : Gegenstromwärmetauscher |
| **KNV** | : Reaktor für katalytische Nachverbrennung |
| **W4** | : Wärmetauscher, elektrisch betrieben |
| **W5** | : Wärmetauscher |
| **TU** | : Entspannungsturbine |

**Legende zu Tabelle 1a und b:**

Zu Figur 1 sind in **Tabelle 1 a und b** die Stoffströme, deren Zusammensetzungen und die jeweiligen Betriebsbedingungen dargelegt.

**Legende der Abkürzungen:**

| | |
|---|---|
| p-X : | para-Xylol |
| p-TA : | para-Toluylsäure |
| p-TE : | para-Toluylsäuremethylester (pT-Ester) |
| BME : | Benzoesäuremethylester |
| HM-BME : | Hydroxymethylbenzoesäuremethylester |
| MM-BME : | Methoxymethylbenzoesäuremethylester |
| DMT : | Dimethylterephthalat |
| DMT-roh = | Rohester (DMT-Rohesterstrom nach der Veresterung) |
| Roh-DMT : | Dimethylterephthalatfraktion nach der Rohester-Destillation |
| DMT-reinst : | Dimethylterephthalat-reinst (hochreines DMT-Zwischen- oder Endprodukt) |
| DMO : | Dimethylorthophthalsäure |
| DMI : | Dimethylisophthalsäure |
| DMP : | Dimethylphthalate = Isomerengemisch aus DMT, DMO und DMI |
| MMT : | Monomethylterephthalat (Terephthalsäuremonomethylester) |
| TA : | Terephthalsäure |
| MTA : | mittelreine Terephthalsäure |
| PTA : | Terephthalsäure hoher Reinheit |
| PTA-p : | Terephthalsäure sehr hoher, d. h. höchster Reinheit (Gehalt an MMT und p-TA von zusammen < 50 Gew.-ppm) |
| TAS : | Terephthalaldehydsäure (4-CBA) |
| TAE : | Terephthalaldehydsäuremethylester |

Formaldehyd-DMA : Formaldehyddimethylacetal
Acetaldehyd-DMA : Acetaldehyddimethylacetal

**Tabelle 1a**

| Stoffströme | 100 | 110 | 120 | 130 | 140 | 150 | 170 | 180 | 190 | 210 |
|---|---|---|---|---|---|---|---|---|---|---|
| Mengen [kg/h] | 20000 | 70768 | 568 | 90200 | 54 | 90254 | 90254 | 90254 | 90254 | 90254 |
| Mengen [m³/h] | | | | 16229 | 7,97 | 16242 | 21648 | 28382 | 23109 | 106052 |
| Temperatur [°C] | 35 | 120 | 105 | 121,5 | 110 | 122 | 250 | 401 | 277 | 123 |
| Druck [bar] | 7,1 | 7,1 | 7,1 | 7,1 | 7,5 | 7,1 | 7 | 7 | 6,9 | 1,1 |
| Zusammensetzung | [kg] | [kg] | [kg] | [kg] | [kg] | [kg] | siehe 150 | [kg] | siehe 180 | [kg] |
| Wasser | 19094 | 159,3 | 534 | 18719 | | 18719 | | 19250 | | 19250 |
| Methanol | 2 | 22 | 0,1 | 23,7 | | 23,7 | | | | |
| p-TE | Spuren | Spuren | | Spuren | | Spuren | | | | |
| p-Xylol | 4,6 | 4,6 | | 4,8 | | 4,8 | | | | |
| BME | Spuren | 26,5 | 0,03 | 26,5 | | 26,5 | | | | |
| Essigsäure | 520 | 0,03 | 25,9 | 494,3 | | 494,3 | | | | |
| Ameisensäure | 240 | 0,3 | 7,7 | 232,8 | | 232,8 | | | | |
| Formaldehyd | | | 0,1 | 131,9 | | 131,9 | | | | |
| Acetaldehyd | 132 | | | | | | | | | |
| Methylacetat | 2 | 11,77 | | 13,7 | | 13,7 | | | | |
| Ethylacetat | Spuren | Spuren | | Spuren | | Spuren | | | | |

Tabelle 1a - Fortsetzung

| Stoffströme | 100 | 110 | 120 | 130 | 140 | 150 | 170 | 180 | 190 | 210 |
|---|---|---|---|---|---|---|---|---|---|---|
| Zusammensetzung | [kg] | [kg] | [kg] | [kg] | [kg] | [kg] | [kg] | [kg] | [kg] | [kg] |
| Dimethylether | Spuren | Spuren | | Spuren | | Spuren | | . | | |
| Methylformiat | 10 | 8 | 0,1 | 17,8 | | 17,8 | | | | |
| Formaldehyd-DMA | Spuren | Spuren | | Spuren | | Spuren | | | | |
| Acetaldehyd-DMA | Spuren | Spuren | | Spuren | | Spuren | | | | |
| Stickstoff | | 66051 | 0,04 | 66051 | 41,4 | 66092,4 | | 66090 | | 66090 |
| Sauerstoff | | 1957 | | 1957 | 12,60 | 1969,6 | | 794 | | 794 |
| $CO_2$ | | 2038 | 0,03 | 2038 | | 2038 | | 4120 | | 4120 |
| CO | | 489,5 | | 489,5 | | 489,5 | | 0 | | 0 |

EP 0 829 295 A2

Tabelle 1b

| Stoffströme | 100 | 110 | 120 | 130 | 140 | 150 | 170 | 180 | 190 | 210 |
|---|---|---|---|---|---|---|---|---|---|---|
| | | | | | | | | | | |
| Mengen [kg/h] | 20000 | 70768 | 568 | 90200 | 54 | 90254 | 90254 | 90254 | 90254 | 90254 |
| Mengen [m³/h] | | | | 16229 | 7,97 | 16242 | 21648 | 28382 | 23109 | 106052 |
| Temperatur (°C) | 35 | 120 | 105 | 121,5 | 110 | 122 | 250 | 401 | 277 | 123 |
| Druck [bar] | 7,1 | 7,1 | 7,1 | 7,1 | 7,5 | 7,1 | 7 | 7 | 6,9 | 1,1 |
| | | | | | | | | | | |
| Zusammensetzung | [Gew.%] | [Gew.-%] | [Gew.-%] | [Gew.-%] | [Gew.-%] | [Gew.-%] | siehe 150 | [Gew.-%] | siehe 180 | [Gew.-%] |
| | | | | | | | | | | |
| Wasser | 95,47 | 0,23 | 94,01 | 20,75 | | 20,74 | | 21,33 | | 21,33 |
| Methanol | 0,01 | 0,03 | 0,02 | 0,03 | | 0,03 | | | | |
| p-TE | Spuren | Spuren | | Spuren | | Spuren | | | | |
| p-Xylol | | 0,01 | | 0,01 | | 0,01 | | | | |
| BME | Spuren | 0,04 | 0,01 | 0,03 | | 0,03 | | | | |
| Essigsäure | 2,60 | 0,00 | 4,56 | 0,55 | | 0,55 | | | | |
| Ameisensäure | 1,20 | 0,00 | 1,36 | 0,26 | | 0,26 | | | | |
| Formaldehyd | | | 0,02 | 0,15 | | 0,15 | | | | |
| Acetaldehyd | 0,66 | | | | | | | | | |
| Methylacetat | 0,01 | 0,02 | | 0,02 | | 0,02 | | | | |
| Ethylacetat | Spuren | Spuren | | Spuren | | Spuren | | | | |

EP 0 829 295 A2

Tabelle 1b - Fortsetzung

| Stoffströme | 100 | 110 | 120 | 130 | 140 | 150 | 170 | 180 | 190 | 210 |
|---|---|---|---|---|---|---|---|---|---|---|
| | | | | | | | | | | |
| Zusammensetzung | [Gew.-%] | [Gew.-%] | [Gew.-%] | [Gew.-%] | [Gew.-%] | [Gew.-%] | siehe 150 | [Gew.-%] | siehe 180 | [Gew.-%] |
| | | | | | | | | | | |
| Dimethylether | Spuren | Spuren | | Spuren | | Spuren | | | | |
| Methylformiat | 0,05 | 0,01 | 0,02 | 0,02 | | 0,02 | | | | |
| Formaldehyd-DMA | Spuren | Spuren | | Spuren | | Spuren | | | | |
| Acetaldehyd-DMA | Spuren | Spuren | | Spuren | | Spuren | | | | |
| Stickstoff | | 93,33 | 0,01 | 73,23 | 76,67 | 73,23 | | 73,23 | | 73,23 |
| Sauerstoff | | 2,77 | | 2,17 | 23,33 | 2,18 | | 0,88 | | 0,88 |
| $CO_2$ | | 2,88 | 0,01 | 2,26 | | 2,26 | | 4,56 | | 4,56 |
| CO | | 0,69 | | 0,54 | | 0,54 | | 0 | | 0 |

EP 0 829 295 A2

**Patentansprüche**

1. Katalysator für Verfahren zur Reinigung von unter Druck stehenden Abgasen, wie sie nach der Oxidation von para-Xylol (p-X) mit Luft in flüssiger Phase bei der Herstellung von Dimethylterephthalat (DMT) anfallen,
dadurch gekennzeichnet,
daß er als Komponenten

   a) mindestens ein Oxid des Titans und
   b) mindestens ein Element aus der VIII. Nebengruppe des Periodensystems der Elemente in metallischer und/oder oxidischer Form

   enthält.

2. Katalysator nach Anspruch 1,
dadurch gekennzeichnet,
daß er als Komponente b) Platin und/oder Palladium und/oder Rhodium enthält.

3. Katalysator nach Anspruch 1 oder 2,
dadurch gekennzeichnet,
daß er

   - Komponente a) in Mengen von 50 bis 99 Gew.-% und
   - Komponente b) in Mengen von 0,01 bis 5 Gew.-%,

   wobei Komponente b) in Summe und als Metall gerechnet ist,
jeweils bezogen auf das Gewicht des Katalysators, enthält.

4. Katalysator nach mindestens einem der Ansprüche 1 bis 3,
dadurch gekennzeichnet,
daß er als Komponente c) Sulfat enthält.

5. Katalysator nach Anspruch 4,
dadurch gekennzeichnet,
daß er Komponente c) in Mengen von 0,1 bis 10,0 Gew.-%, bezogen auf das Gewicht des Katalysators, enthält.

6. Katalysator nach mindestens einem der Ansprüche 1 bis 5,
dadurch gekennzeichnet,
daß er als zusätzliche Komponenten Bariumsulfat und/oder Oxide des Wolframs und/oder Oxide des Vanadiums und/oder Oxide des Zirkons und/oder entsprechende Sulfate und/oder Phosphate und/oder Oxide des Siliziums und/oder Silikate enthält.

7. Katalysator nach mindestens einem der Ansprüche 1 bis 6,
dadurch gekennzeichnet,
daß er Titanoxid enthält, das überwiegend in der Anatas-Form vorliegt.

8. Katalysator nach mindestens einem der Ansprüche 1 bis 7,
dadurch gekennzeichnet,
daß er Wabenstruktur besitzt.

9. Katalysator nach mindestens einem der Ansprüche 1 bis 8,
dadurch gekennzeichnet,
daß Komponente b) zum überwiegenden Teil im Bereich der Oberfläche des Katalysatorformkörpers vorliegt.

10. Verfahren zur Herstellung eines Katalysators nach den Ansprüchen 1 bis 9,
dadurch gekennzeichnet,
daß man Komponente b) auf Formkörper, die mindestens Komponente a) enthalten, einzeln oder im Gemisch durch Tauch- und/oder Sprühimprägnieren aufbringt.

11. Verfahren nach Anspruch 10,
dadurch gekennzeichnet,
daß man Formkörper mit einer BET-Oberfläche zwischen 10 bis 200 $m^2$/g und einem Porenvolumen zwischen 0,1 und 0,6 $cm^3$/g einsetzt.

12. Verfahren nach Anspruch 10 oder 11,
dadurch gekennzeichnet,
daß man für die Imprägnierung der Formkörper eine Lösung verwendet, für deren Zubereitung Komponente b) als Nitrat eingesetzt wird.

13. Verfahren nach mindestens einem der Ansprüche 10 bis 12,
dadurch gekennzeichnet,
daß man die imprägnierten Formkörper unter Zutritt von Luft thermisch nachbehandelt.

14. Verfahren zur Reinigung von unter Druck stehenden Abgasen, wie sie nach der Oxidation von para-Xylol (p-X) mit Luft in flüssiger Phase bei der Herstellung von Dimethylterephthalat (DMT) anfallen, wobei das unter Druck stehende, sauerstoffhaltige Abgas aus der Oxidation zunächst über eine ein- oder mehrstufige Kondensation, eine ein- oder mehrstufige Absorption und nachfolgend gegebenenfalls unter Zufuhr von Sauerstoff über eine unter Druck betriebene katalytische Nachverbrennung geführt wird,
dadurch gekennzeichnet,
daß man für die katalytische Nachverbrennung einen Katalysator nach den Ansprüchen 1 bis 13 einsetzt.

15. Verfahren nach Anspruch 14,
dadurch gekennzeichnet,
daß man die katalytische Nachverbrennung im Temperaturbereich zwischen 160 und 650 °C und bei Drücken von 2 bis 20 bar abs. betreibt.

16. Verfahren nach Anspruch 14 oder 15,
dadurch gekennzeichnet,
daß man die katalytische Nachverbrennung bei einer Raumgeschwindigkeit (GHSV) im Bereich von 1 000 $h^{-1}$ bis 50 000 $h^{-1}$ betreibt.

17. Verfahren nach mindestens einem der Ansprüche 14 bis 16,
dadurch gekennzeichnet,
daß man nach der letzten Stufe der Absorption Prozeßwasser, das organische Bestandteile enthält, über einen Sättiger dem Abgasstrom zuführt.

18. Verfahren nach mindestens einem der Ansprüche 14 bis 17,
dadurch gekennzeichnet,
daß das Abgas vor Katalysator dampfförmiges Wasser in Mengen von 0,04 bis 2,8 kg/$Nm^3$ enthält.

19. Verfahren nach mindestens einem der Ansprüche 14 bis 18,
dadurch gekennzeichnet,
daß man das katalytisch unter Druck gereinigte Abgas zur Erzeugung von mechanischer oder elektrischer Energie über eine Turbine entspannt.

20. Verfahren nach Anspruch 19,
dadurch gekennzeichnet,
daß man aus dem unter Druck stehenden, katalytisch gereinigten Abgas wenigstens teilweise die im Abgas noch enthaltene Energie zurückgewinnt, indem man den unter einem Druck von mehr als 3 bar abs. stehenden Abgasstrom in einer Entspannungsturbine zur Erzeugung mechanischer und/oder elektrischer Energie entspannt.

21. Verfahren nach mindestens einem der Ansprüche 14 bis 20,
dadurch gekennzeichnet,
daß man das gereinigte Abgas als Inertgas weiterverwendet.

Figur: 1

EP 0 829 295 A2